# EUROPEAN PATENT APPLICATION

(11) **EP 3 944 093 A1**
(43) Date of publication of application: **26.01.2022**
(21) Application number: 20774598.5
(22) Date of filing: 10.01.2020
(51) Int. Cl.: G06F 16/242, G06F 16/26

(54) **PAINT COLOR SEARCH DEVICE**

(30) Priority: 18.03.2019 JP 2019050274
(71) Applicant: Kansai Paint Co., Ltd, Amagasaki-shi, Hyogo 661-8555 (JP)
(72) Inventor: GONTANI Haruyuki, Hiratsuka-shi, Kanagawa 254-8562 (JP); MASUDA Yutaka, Hiratsuka-shi, Kanagawa 254-8562 (JP); ONO Ikumi, Hiratsuka-shi, Kanagawa 254-8562 (JP)
(74) Representative: Stöckeler, Ferdinand
(86) International application number: PCT/JP2020/000586
(87) International publication number: WO 2020/188964

(57) **Abstract**

The present paint color retrieval device (100) is a paint color retrieval device including a computer 2 having a paint color database, in which the paint color database includes paint color basic information having paint color blend information of a paint color, and paint color analysis information analyzed on the basis of a spectral reflectance obtained by measuring the paint color using a multi-angle spectrophotometer. The paint color analysis information may include a colorimetric value for each predetermined observation angle calculated from the spectral reflectance, and a computer graphic image generated from the colorimetric value.

## Description

### [TECHNICAL FIELD]

The present invention relates to a paint color retrieval device. The present application claims priority from Japanese Patent Application No. 2019-050274 filed on March 18, 2019, the contents of which are incorporated herein by reference.

### [BACKGROUND ART]

It is not easy to match the paint colors of paints applied to industrial products such as automobiles, especially metallic paint colors whose appearance changes depending on an observation angle, to the requirements of designers. In many cases, a designer determines a paint color required by the designer by having a paint company create a paint plate (sample) on which candidate paint colors are applied and evaluating the paint plate.

A paint company may select a paint color having a color and texture that match an image required by the designer from a vast color library created in the past. Using the paint color as a reference color, the color and texture are adjusted to create the paint color required by the designer. Designers often express a required paint color in abstract terms, and a lot of trial and error has been required for information transfer and paint plate trial production between designers and paint companies. Therefore, in order to efficiently retrieve a paint color having a color and texture that match an image required by a designer and adjust the paint color to a paint color required by the designer, various assistance methods and assistance devices have been devised.

The method of determining optical properties of a metallic paint film described in Patent Document 1 can generate a computer graphic image (RGB image) in a wide range of observation angles from highlight to shade of metallic paint colors in which an appearance varies depending on an observation angle. A designer can confirm the metallic paint color, which is not easy to evaluate, using the computer graphic image before trial production.

In the method for quickly searching for approximate colors of metallic paint colors described in Patent Document 2, an approximate color of a metallic paint color is retrieved at high speed from a color library, and a computer graphic image of the retrieved approximate color is displayed on a monitor. A designer can visually confirm the displayed approximate color of the metallic paint color and can efficiently find a paint color having a color and texture that match the image required by the designer.

In the method for generating and displaying a changed color and the like described in Patent Document 3, a changed color obtained by adjusting a brightness, tints, or the like from a metallic paint color serving as a reference is generated on the basis of a color library. A designer can visually determine an adjustment direction of the metallic paint color from the computer graphic image.

In the method for identifying a paint color from computer graphic images described in Patent Document 4, on the basis of a computer graphic image such as a photograph that matches an impression of a paint color required by a designer, a paint color that is approximate to the computer graphic image can be retrieved from a color library. A designer can efficiently transfer the paint color required by the designer to a painting company using a computer graphic image such as a photograph.

According to the paint color texture map and the like described in Patent Document 5, when a "texture map" in which a plurality of paint colors are classified on the basis of a plurality of feature amounts is presented to a designer, a plurality of candidate approximate colors can be relatively visualized, and determination of a paint color required by the designer can be assisted.

### [PRIOR ART DOCUMENTS]

### [PATENT DOCUMENTS]

[Patent Document 1]
   Japanese Unexamined Patent Application, First Publication No. H10-10045
[Patent Document 2]
   Japanese Unexamined Patent Application, First Publication No. 2002-259398
[Patent Document 3]
   Japanese Unexamined Patent Application, First Publication No. 2004-258854
[Patent Document 4]
   Japanese Unexamined Patent Application, First Publication No. 2005-157771
[Patent Document 5]
   Japanese Unexamined Patent Application, First Publication No. 2008-122335

### [SUMMARY OF INVENTION]

### [PROBLEMS TO BE SOLVED BY THE INVENTION]

The above-described methods and devices are useful for efficiently retrieving a paint color having a color and texture that match an image required by a designer and efficiently adjusting the paint color to a paint color required by the designer. However, in order to use these methods and devices well according to purposes, know-how is required and assistance of a skilled person is required in many cases.

In view of the above circumstances, an object of the present invention is to provide a paint color retrieval device that can easily retrieve a paint color required by a designer from a database including a color library.

### [MEANS FOR SOLVING THE PROBLEMS]

In order to solve the above-described problems, the present invention proposes the following means.

A paint color retrieval device according to one aspect of the present invention is a paint color retrieval device including a computer having a paint color database, in which the paint color database includes paint color basic information having paint color blend information of a paint color, and paint color analysis information analyzed on the basis of a spectral reflectance obtained by measuring the paint color using a multi-angle spectrophotometer.

### [Effects of the Invention]

According to the paint color retrieval device of the present invention, a paint color required by a designer can be easily retrieved from the database including a color library.

### [BRIEF DESCRIPTION OF THE DRAWINGS]

Fig. 1 is a configuration diagram of a paint color retrieval device according to a first embodiment of the present invention.
Fig. 2 is a configuration diagram of a computer of the paint color retrieval device according to the first embodiment of the present invention.
Fig. 3 is a functional block diagram of the computer of the paint color retrieval device according to the first embodiment of the present invention.
Fig. 4 is a configuration diagram of a paint color database of the paint color retrieval device according to the first embodiment of the present invention.
Fig. 5 is a diagram showing a measurement example of a spectral reflectance of a paint color.
Fig. 6 is an approximate color display screen created by an approximate color retrieval unit of the paint color retrieval device according to the first embodiment of the present invention.
Fig. 7 is a changed color presentation screen created by a changed color selector of the paint color retrieval device according to the first embodiment of the present invention.
Fig. 8 is a sample color display screen created by a sample color retrieval unit of the paint color retrieval device according to the first embodiment of the present invention.
Fig. 9 is a texture map display screen created by a texture map generator of the paint color retrieval device according to the first embodiment of the present invention.
Fig. 10 is a surface texture image of a sedan when a metallic paint color of Paint color Toyota 1D2 Gray M (silver metallic) is applied.
Fig. 11 is a two-dimensional image of an automobile (sedan) which is a source of the surface texture image.
Fig. 12 is a painted surface image generated from Fig. 11.
Fig. 13 is a histogram of Fig. 12.
Fig. 14 is a function selection menu screen displayed on an image output unit of the paint color retrieval device according to the first embodiment of the present invention.

### [EMBODIMENTS FOR CARRYING OUT THE INVENTION]

### (First embodiment)

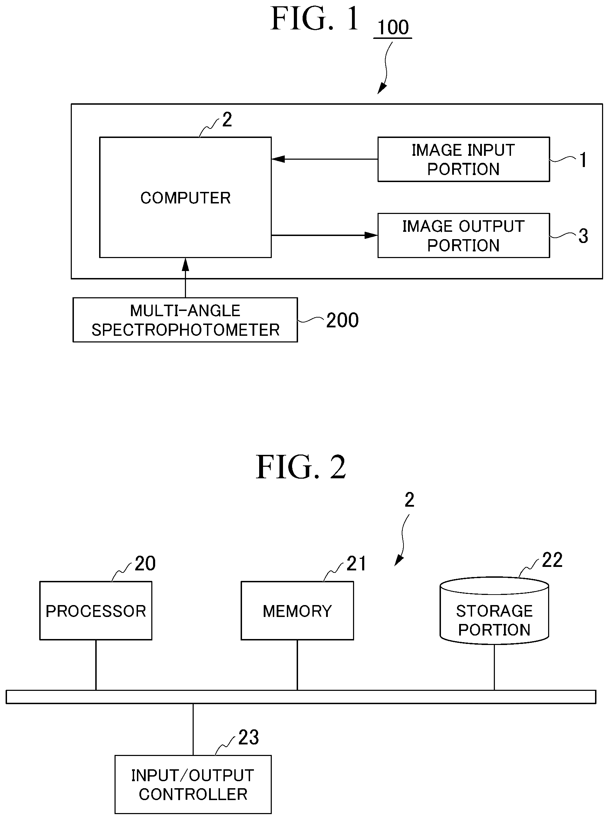

A first embodiment of the present invention will be described with reference to Figs. 1 to 14.

Fig. 1 is a configuration diagram of a paint color retrieval device 100. The paint color retrieval device 100 includes an image input unit 1 such as a scanner, a computer 2 capable of executing a program, and an image output unit 3 such as an LCD monitor. A multi-angle spectrophotometer 200 can be connected to the paint color retrieval device 100.

Fig. 2 is a configuration diagram of the computer 2.

The computer 2 is a program-executable processing device including a processor 20, a memory 21 capable of reading a program, a storage unit 22 capable of storing a program and data, and an input/output controller 23. A function of the computer 2 is realized by the processor 20 executing the program provided in the computer 2.

The storage unit 22 is a non-volatile recording medium that stores a program and necessary data. The storage unit 22 is configured by, for example, a hard disk, a ROM, or a flash memory. A paint color database D to be described later is stored in the storage unit 22.

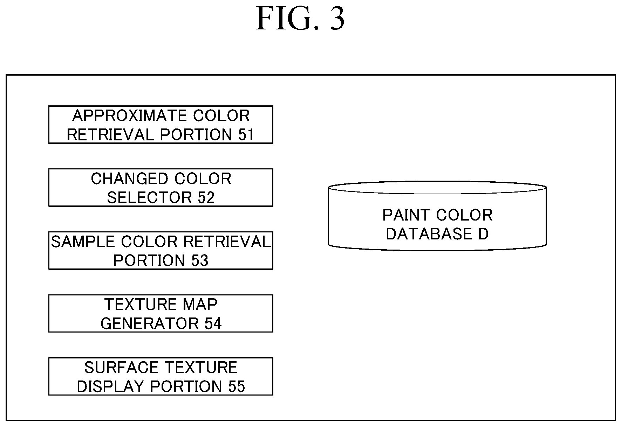

Fig. 3 is a functional block diagram of the computer 2 when the computer 2 executes a paint color retrieval program of the paint color retrieval device 100. The functional blocks include an approximate color retrieval unit 51, a changed color selector 52, a sample color retrieval unit 53, a texture map generator 54, a surface texture display unit 55, and the paint color database D.

### [Paint color database D]

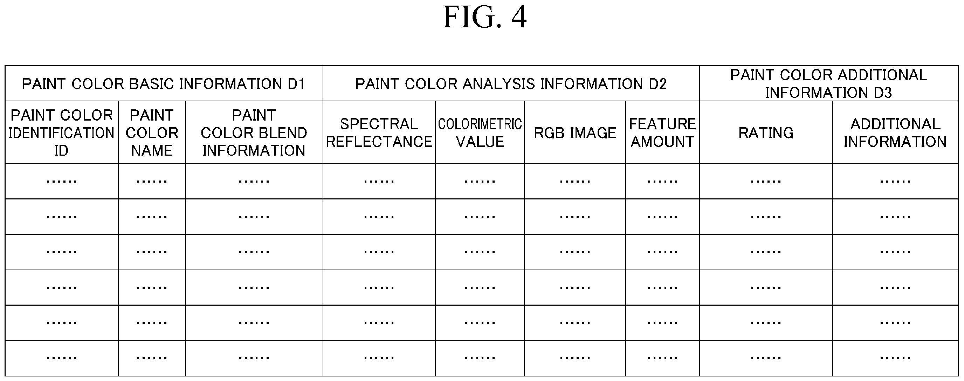

Fig. 4 is a configuration diagram of the paint color database D.

The paint color database D is a database containing a large amount of paint color data including metallic paint colors. The paint color database D includes paint color basic information D1, paint color analysis information D2, and paint color additional information D3. The paint color basic information D1 is information on paint colors selected from, for example, an auto color chart of a sample book of a paint company. The paint color analysis information D2 is information obtained by analyzing colored paper (sample) on which a paint is applied using the multi-angle spectrophotometer 200. The paint color additional information D3 is information on paint colors accumulated by the paint company.

The paint color basic information D1 includes a paint color identification ID, a paint color name, and paint color blend information. The paint color identification ID is a unique ID number assigned to paint color data stored in the paint color database D. Also, the paint color name may be a model number name, a product name, or the like set by the paint company.

The paint color blend information stores information on a composition used for a paint blend. Specifically, the paint color blend information includes types of composition used for blending, blend materials constituting the composition and property information (properties, average particle size, or the like) of the blend materials, blending amounts of the composition, and measurement data of the composition.

The measurement data is a property value and a performance test value of a formed film, a molded product, or the like formed of the composition, or a property value of the composition itself. For example, when the composition is a color material composition selected from paints, inks, and colorants, attention is paid to color pigments, lustering materials, and the like as blend materials thereof. As measurement data of the color material composition containing these as constituent components, colorimetric data of the color due to the color material composition can be exemplified.

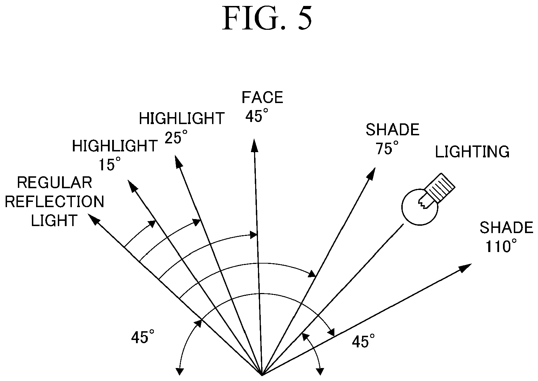

The paint color analysis information D2 includes a spectral reflectance obtained by measuring colored paper (a sample) on which a paint is applied using the multi-angle spectrophotometer 200. For example, as illustrated in Fig. 5, under conditions of an incident light angle of 45 degrees, and light receiving angles (5 angles) including highlights 15 degrees and 25 degrees, a face 45 degrees, and shades 75 degrees and 110 degrees, a spectral reflectance of a paint color of the colored paper (sample) is measured. Measurement on the paint color of the selected colored paper (sample) is performed using, for example, a 5-angle spectrophotometer MA68 manufactured by x-rite, Inc. or a spectrophotometric colorimeter CM-512m3 manufactured by Konica Minolta. The measured spectral reflectance is stored in the paint color database D stored in the storage unit 22 via the input/output controller 23 of the computer 2.

When the 5-angle spectrophotometer MA68 manufactured by x-rite, Inc. is used, the measurement angles are 5 angles. In that case, the spectral reflectance from highlight to shade is predicted from reflectances at five angles by using the regression expression and the regression coefficient specified in Patent Document 1 (Kansai Paint Co., Ltd. Yutaka Masuda, Yoichi Kawaguchi; Method of determining optical properties of metallic paint film). Lab^{∗}values (or XYZ values), which are colorimetric values for each predetermined observation angle, are calculated from the predicted value of the spectral reflectance, and a computer graphic image (RGB image) is further obtained.

The paint color analysis information D2 includes the colorimetric values (Lab^{∗}values or the like) and the RGB image for each predetermined observation angle described above. The colorimetric values (Lab^{∗}values or the like) and the RGB image for each observation angle calculated in advance are stored in the paint color database D stored in the storage unit 22. Here, the RGB image can be displayed when it is output to the image output unit 3.

The paint color analysis information D2 further includes a feature amount calculated from the spectral reflectance measured using the multi-angle spectrophotometer 200. On the basis of the method described in Patent Document 5 (Kansai Paint Co., Ltd. Keisuke Sai, Tsukasa Fujieda; Paint color texture map, its creation method, creation program, creation system, and data structure), seven types of feature amounts including IV, SV, FF, cFF, Metal, Deepness, and senmei are calculated. The calculated feature amounts are stored in the paint color database D stored in the storage unit 22.

The paint color additional information D3 is know-how information on paint colors accumulated by the paint company. For example, it may be additional information about a performance rating (evaluation) for each paint color according to a person skilled in paint colors, paint blends, and the like. The additional information may also include information on prohibiting combinations in specific paint blends or the like.

When a person in charge of the paint company has a meeting with a designer to determine a paint color required by the designer, the person in charge of the paint company utilizes the paint color basic information D1 and the paint color analysis information D2. When the person in charge of the paint company is a person skilled in paint colors, the person in charge often can efficiently determine the paint color required by the designer on the basis of accumulated knowledge and experience by using only the paint color basic information D1 and the paint color analysis information D2.

On the other hand, when the person in charge of the paint company is not a person skilled in paint colors, the person in charge often cannot efficiently determine the paint color required by the designer by using only the paint color basic information D1 and the paint color analysis information D2. Therefore, the above-described rating information obtained from the skilled person in advance and information on the paint blends are stored in the paint color retrieval device 100 as the paint color additional information D3. The person in charge who is not a skilled person can efficiently determine the paint color required by the designer by utilizing the paint color additional information D3.

### [Paint color retrieval program]

Next, functions of the functional block (see Fig. 3) realized by the computer 2 executing the paint color retrieval program will be described.

### [Approximate color retrieval unit 51]

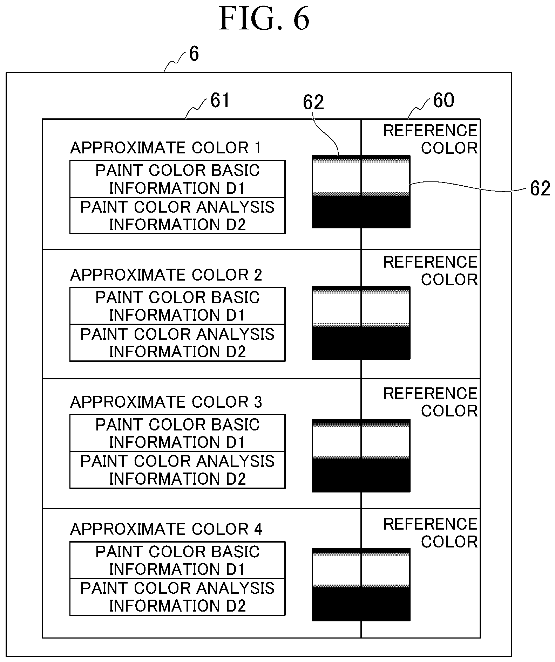

Fig. 6 is an approximate color display screen 6 created by the approximate color retrieval unit 51 and displayed as a GUI on the image output unit 3. The approximate color retrieval unit 51 selects and presents a plurality of approximate colors approximate to a reference color, which has been selected from the paint color database D by a user of the paint color retrieval device 100, from the paint color database D.

As a method for retrieving approximate colors, for example, Patent Document 2 (Kansai Paint Co., Ltd. Yutaka Masuda; A method for quick searching for approximate colors of metallic paint colors) can be used. The approximate color retrieval unit 51 selects a plurality of paint colors whose weighted-angle average color difference values are approximate to a weighted-angle average color difference value of the reference color from the paint colors in the paint color database D.

As shown in Fig. 6, the reference color and the plurality of selected approximate colors (approximate colors 1 to 4) are displayed on the approximate color display screen 6. The reference color is displayed in a reference color display region 60 on a right side of the screen. Also, the plurality of approximate colors are displayed in an approximate color display region 61 arranged in a vertical direction on a left side of the screen.

An RGB image 62 of the reference color is displayed in the reference color display region 60. The RGB image 62 is, for example, a color simulation image (hereinafter, referred to as "CS image") which is a computer simulation image that can be used as a digital palette. The CS image is an image generated from a computer graphic image (RGB image) for each predetermined observation angle stored in the paint color database D. The CS image is a computer simulation image that displays a paint color observed from a wide range of angles from highlight to shade in a gradation pattern. The designer can intuitively perform a paint color evaluation by observing the CS image.

In the approximate color display region 61, the paint color basic information D1, the paint color analysis information D2, and the RGB image 62 (for example, the CS image) regarding the approximate color are displayed. The designer can observe the RGB image 62 of the plurality of approximate colors at the same time and can relatively evaluate the approximate colors.

A rating and additional information included in the paint color additional information D3 may be displayed in the approximate color display region 61 as assistance information for selection of the paint color. Even when the person in charge of the paint company lacks knowledge and experience regarding paint colors, these pieces of additional information can efficiently assist the person in charge performing selection of the paint color required by the designer.

### [Changed color selector 52]

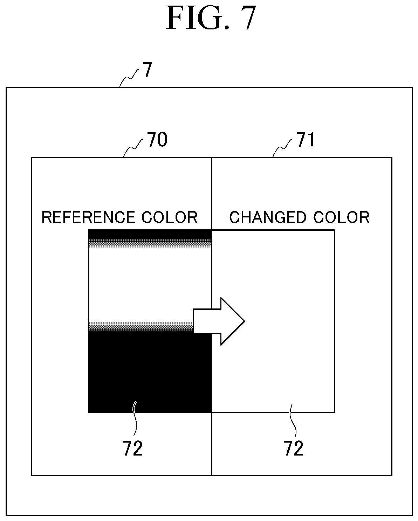

Fig. 7 is a changed color presentation screen 7 created by the changed color selector 52 and displayed as a GUI on the image output unit 3. The changed color selector 52 selects and presents a plurality of changed colors changed on the basis of indexes such as saturation and tints with respect to the reference color, which has been selected from the paint color database D by the user of the paint color retrieval device 100, from the paint color database D.

As a method for presenting the changed colors, for example, Patent Document 3 (Kansai Paint Co., Ltd. Yutaka Masuda; Method and apparatus for generating and displaying changed color) can be used. The changed colors changed on the basis of indexes such as an impression of shade, saturation, and tints (for example, a reddish tint and a bluish tint) of metallic paint colors with respect to the reference color can be selected from the paint color database D.

As shown in Fig. 7, the reference color and the selected changed color are displayed on the changed color presentation screen 7. The reference color is displayed in a reference color display region 70 on a left side of the screen. Also, the selected color is displayed in a changed color display region 71 disposed on a right side of the reference color display region 70.

An RGB image 72 (for example, CS image) is displayed in the reference color display region 70 and the changed color display region 71. The designer can observe the RGB image 72 of the changed colors at the same time, relatively evaluate the changed colors, and effectively determine a correction policy from the reference color. The paint color basic information D1 and the paint color analysis information D2 may be displayed together in the reference color display region 70 and the changed color display region 71.

For example, the changed color may be one changed from the reference color on the basis of the following indexes. For example, the changed color is a changed color in which brightness in a shade range is lowered with respect to the reference color. For example, the changed color is a changed color in which brightness in a highlight range is lowered with respect to the reference color. For example, the changed color is a changed color that emphasizes a bluish tint with respect to the reference color. For example, the changed color is a changed color that emphasizes an impression of shade with respect to the reference color. The designer can observe a plurality of changed colors changed on the basis of such indexes and can confirm a correction method for adjusting the reference color to the paint color required by the designer.

### [Sample color retrieval unit 53]

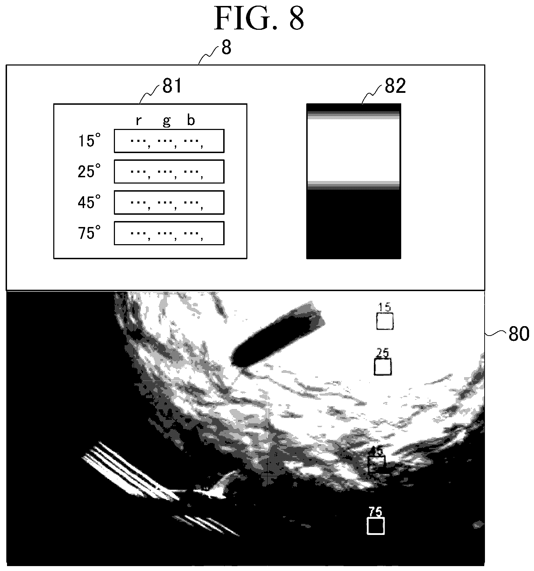

Fig. 8 is a sample color display screen 8 created by the sample color retrieval unit 53 and displayed as a GUI on the image output unit 3. The sample color retrieval unit 53 selects and presents a paint color that is approximate to a sample color, which has been selected from computer graphic images such as photographs by the user of the paint color retrieval device 100, from the paint color database D.

When an image that the designer requires is presented by the designer, as a supplement to abstract terms such as "a feeling of metal" and "a feeling of transparency," an image board in which magazine cutouts, photographs, and the like are combined may be presented. In response to this, the person in charge of the paint company retrieves a paint color from the paint color database D so that an image received from the paint color matches the presented image. However, this retrieval work depends on skills of the person in charge of the paint company. Therefore, from the presented image such as a photograph, a color that matches the image is sampled as a sample color.

For example, Patent Document 4 (Kansai Paint Co., Ltd. Yutaka Masuda, Tsukasa Fujieda; Method for identifying paint color from computer graphic images) can be used for a method of specifying a sample color and selection of a paint color approximate to the sample color.

As shown in Fig. 8, a computer graphic image 80 such as a photograph input from the image input unit 1 is displayed on the sample color display screen 8. The designer specifies a position of the computer graphic image 80 using an input means such as a mouse connected to the computer 2 and determines color information corresponding to four light receiving angles (highlight 15 degrees, highlight 25 degrees, face 45 degrees, and shade 75 degrees) (see Fig. 5). The sample color retrieval unit 53 analyzes the color information (RGB data) corresponding to the four angles and displays the analyzed RGB values as the sample color data 81. Also, the sample color retrieval unit 53 generates a CS image 82 from the color information (RGB data) corresponding to the four angles and displays it together.

The sample color retrieval unit 53 retrieves a paint color that is approximate to the sample color obtained by the above-described method from the paint color database D. Selection of the paint color that approximates the sample color specified by the RGB value is performed, for example, on the basis of "Calculation method of Euclidean distance with respect to RGB value of paint color" described in Patent Document 4. The sample color retrieval unit 53 retrieves those having a small RGB color difference from the RGB value of the sample color from the RGB images of the paint colors stored in the paint color database D. The sample color retrieval unit 53 selects a plurality of RGB images having a small value in the RGB color difference as approximate paint colors.

The plurality of selected approximate colors are displayed on the image output unit 3 in the same format as the approximate color display screen 6 shown in Fig. 6. The designer can efficiently transfer the paint color required by the designer to a painting company using a computer graphic image such as a photograph. Also, the designer can use the sample color obtained by the input as a reference color to get closer to the paint colors required by the designer using the functions of the approximate color retrieval unit 51 and the changed color selector 52.

### [Texture map generator 54]

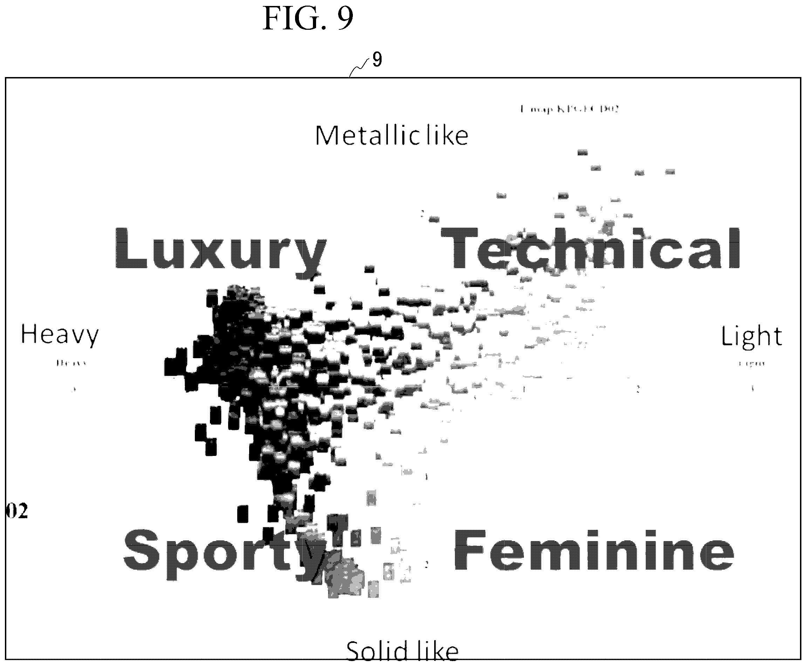

Fig. 9 is a texture map display screen 9 created by the texture map generator 54 and displayed as a GUI on the image output unit 3. The texture map generator 54 generates a "texture map" in which the paint colors stored in the paint color database D are classified on the basis of a plurality of feature amounts and presents it to the designer.

As a method for generating a texture map, for example, Patent Document 5 (Kansai Paint Co., Ltd. Keisuke Sai, Tsukasa Fujieda; Paint color texture map, its creation method, creation program, creation system, and data structure) can be used. The texture map generator 54 generates a texture map using the feature amounts stored in the paint color database D.

As shown in Fig. 9, the texture map is one in which a plurality of paint colors are plotted in a mapping space on the basis of a specific feature amount. In the texture map shown in Fig. 9, CS images of paint colors are each displayed in the mapping space.

When the "texture map" in which a plurality of paint colors are classified on the basis of a plurality of feature amounts is presented to the designer, a plurality of candidate approximate colors can be relatively visualized. Even when the person in charge of the paint company lacks knowledge and experience regarding paint colors, it is possible to assist the person in charge who determines the paint color required by the designer who often expresses in abstract terms.

Further, the map generated by the texture map generator 54 is not limited to the texture map, various classification maps can be generated using the feature amounts stored in the paint color database D, and for example, a "Hue-Tone map" or the like can also be generated.

### [Surface texture display unit 55]

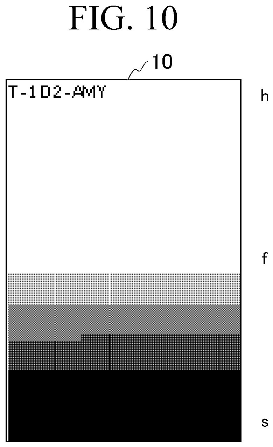

Fig. 10 is a surface texture display screen 10 created by the surface texture display unit 55 on the basis of a surface texture image created by another device (hereinafter referred to as a "surface texture display image generation device") and displayed as a GUI on the image output unit 3. The surface texture display image generation device generates a "surface texture image" that makes it easy to predict an overall impression when a paint color, especially a metallic paint color, is applied to a painted surface of an industrial product on the basis of the paint color database D. Fig. 10 is a surface texture image of a sedan when a metallic paint color of Paint color Toyota 1D2 Gray M (silver metallic) is applied.

The CS image is not an image in which change in shade on the painted surface is taken into consideration. Therefore, an overall impression is difficult to predict from the CS image when a metallic paint color is applied to a painted surface of an actual industrial product. On the other hand, the surface texture image is an image in which change in shade on the painted surface is taken into consideration. Therefore, an overall impression is easy to predict with the surface texture image when a metallic paint color is applied to a painted surface of an industrial product.

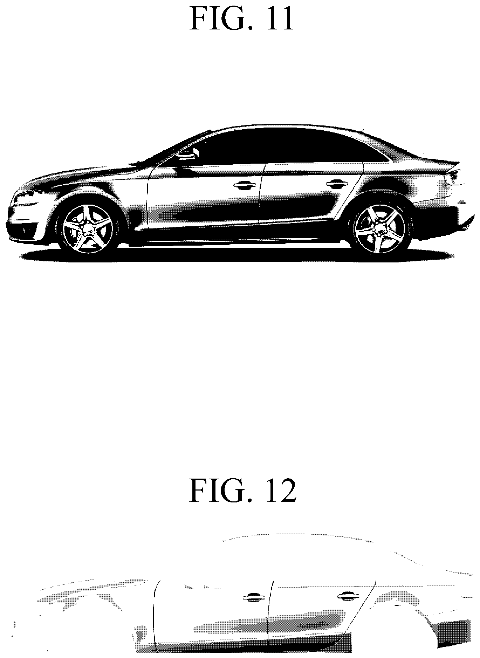

The surface texture display image generation device can generate a "surface texture image" that makes it easy to predict an overall impression when a metallic paint color is applied to a painted surface. The generation of the "surface texture image" is on the basis of change in shade of a painted surface image (two-dimensional image) that displays a painted surface applied to an industrial product, a model thereof, or the like. In the present embodiment, a surface texture image when a metallic paint color is applied to a painted surface of a sedan is generated on the basis of change in shade of the image of the sedan shown in Fig. 11.

First, prior image processing is performed on the sedan image shown in Fig. 11. From the sedan image, a "painted surface image" in which only an image portion of the actual painted surface is cut out is generated. Fig. 12 is the painted surface image generated from the sedan image.

In the present embodiment, the painted surface image is an image in which a color image of the sedan image is converted into an 8-bit grayscale image. Further, the painted surface image is not limited to the grayscale image. The painted surface image need only be an image configured by one (hereinafter referred to as "shading level") corresponding to a luminance value of an image represented by an arbitrary number of bits such as a Y component of a YUV signal and a G component of an RGB signal.

The painted surface image is generated by a spectral reflectance calculation step S1, a colorimetric value calculation step S2, a histogram generation step S3, a mapping step S4, and a surface texture image generation step S5.

In the spectral reflectance calculation step S1, a spectral reflectance of a metallic paint color for each predetermined angle in an observation angle range (0 degree to 75 degrees) is calculated from a spectral reflectance of the metallic paint color measured at a plurality of light receiving angles by using, for example, the method of determining optical properties of a metallic paint film described in Patent Document 1 exemplified in the prior art document.

Next, the surface texture display image generation device calculates the spectral reflectance of the metallic paint color for each predetermined angle in the observation angle range (0 degree to 75 degree) from the measured spectral reflectance at five angles. The surface texture display image generation device may derive an expression for calculating the spectral reflectance of the metallic paint color for each arbitrary angle. The predetermined angle in the present embodiment is about 0.3 degrees (observation angle range/shading level = 75 degrees/256 = about 0.3 degrees). The calculated spectral reflectance is recorded in the memory of the computer in the surface texture display image generation device together with the corresponding predetermined angle.

In the colorimetric value calculation step S2, a colorimetric value (metallic color) for each predetermined angle in the observation angle range (0 degree to 75 degrees) is calculated on the basis of the calculated spectral reflectance by using, for example, the method of determining optical properties of a metallic paint film described in Patent Document 1 exemplified in the prior art document. The surface texture display image generation device may derive an expression for calculating the colorimetric value for each arbitrary angle. The calculated colorimetric value is recorded in the memory of the computer in the surface texture display image generation device together with the corresponding predetermined angle.

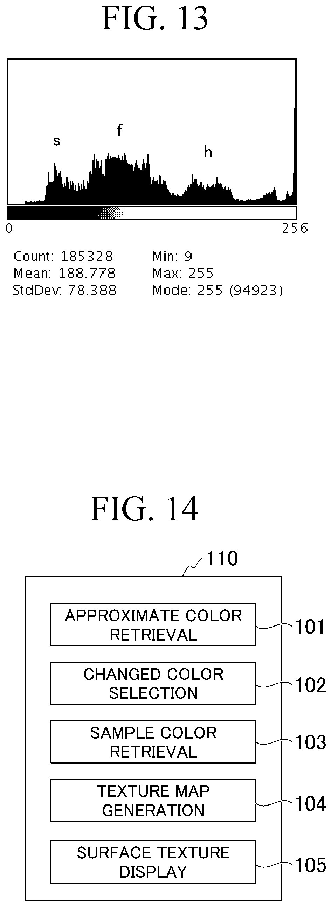

In the histogram generation step S3, the number of pixels for each shading level of the painted surface image prepared in advance is measured, and a ratio of the number of pixels for each shading level is obtained. Fig. 13 is a histogram of a painted surface image of the sedan. Since the painted surface image is an 8-bit grayscale image in the present embodiment, the shading level is 256 steps [0 to 255]. In Fig. 13, the region denoted by "h" indicates a region of the highlight (observation angles 15 degrees and 25 degrees), the region denoted by "f" indicates a region of the face (observation angle 45 degrees), and the region denoted by "s" indicates a region of the shade (observation angles 75 degrees and 110 degrees).

The number of pixels (measured pixel number) for each shading level is grasped from the histogram of the painted surface image. The surface texture display image generation device creates a "corrected pixel number" in which the number of pixels whose shading level is in the vicinity of a maximum and the vicinity of a minimum (for example, substantially black [0 to 5] and substantially white [254 to 255]) is removed from the number of measured pixels. This is because, since the pixels whose shading level is in the vicinity of the maximum and the vicinity of the minimum have a high likelihood of not representing shade of the painted surface created on the basis of a three-dimensional shape of the painted surface itself, the pixels are preferably deleted in the process of generating the surface texture image.

Next, the surface texture display image generation device obtains a ratio of the number of corrected pixels for each shading level [0 to 255] with respect to the total number of pixels of the number of corrected pixels. In Table 1, the number of measured pixels, the number of corrected pixels, and the ratio obtained on the basis of the number of corrected pixels for the painted surface image of the sedan shown in Fig. 11 are shown. The calculated ratios are recorded in the memory of the computer in the surface texture display image generation device together with the corresponding shading levels.

**[Table 1]**

| Shading Level | Measured Pixel Number | Corrected Pixel Number | Ratio |
|---|---|---|---|
| 0 | 0 | 0 | 0 |
| 1 | 0 | 0 | 0 |
| 2 | 0 | 0 | 0 |
| 3 | 0 | 0 | 0 |
| 4 | 0 | 0 | 0 |
| 5 | 0 | 0 | 0 |
| 6 | 0 | 0 | 0 |
| 7 | 0 | 0 | 0 |
| 8 | 0 | 0 | 0 |
| 9 | 1 | 1 | 1.1E-05 |
| 10 | 3 | 3 | 3.4E-05 |
| 11 | 0 | 0 | 0 |
| 12 | 5 | 5 | 5.6E-05 |
| 13 | 12 | 12 | 0.00014 |
| 14 | 8 | 8 | 9E-05 |
| 15 | 43 | 43 | 0.00049 |
| 180 | 329 | 329 | 0.00371 |
| 181 | 336 | 336 | 0.00379 |
| 182 | 362 | 362 | 0.00408 |
| 183 | 308 | 308 | 0.00347 |
| 184 | 359 | 359 | 0.00405 |
| 185 | 491 | 491 | 0.00554 |
| 186 | 386 | 386 | 0.00435 |
| 187 | 355 | 355 | 0.00401 |
| 188 | 378 | 378 | 0.00426 |
| 189 | 363 | 363 | 0.0041 |
| 245 | 71 | 71 | 0.0008 |
| 246 | 92 | 92 | 0.00104 |
| 247 | 185 | 185 | 0.00209 |
| 248 | 245 | 245 | 0.00276 |
| 249 | 180 | 180 | 0.00203 |
| 250 | 131 | 131 | 0.00148 |
| 251 | 154 | 154 | 0.00174 |
| 252 | 218 | 219 | 0.00246 |
| 253 | 574 | 574 | 0.00648 |
| 254 | 1769 | 0 | 0 |
| 255 | 94923 | 0 | 0 |
| Total | | 98636 | 1 |

In the mapping step S4, the observation angle for each predetermined angle in the observation angle range (0 degree to 75 degrees) is associated with each shading level of the painted surface image. In the present embodiment, the shading level 255 (white) is associated with the highlight 0 degree, and the shading level 0 (black) is associated with the shade 75 degree. A highest shading level is associated with a smallest angle in the observation angle range, and a lowest shading level is associated with a largest angle in the observation angle range.

In Table 2, observation angles corresponding to each shading level [0 to 255] calculated by linear interpolation are shown.

**[Table 2]**

| Observation Angle | Shading Level | |
|---|---|---|
| 75.0 | 0 | |
| 74.7 | 1 | |
| 74.4 | 2 | |
| 74.1 | 3 | |
| 73.8 | 4 | |
| 73.5 | 5 | |
| 73.2 | 6 | |
| 72.9 | 7 | |
| 72.6 | 8 | |
| 72.4 | 9 | |
| 72.1 | 10 | |
| 71.8 | 11 | |
| 71.5 | 12 | |
| 71.2 | 13 | |
| 70.9 | 14 | |
| 70.6 | 15 | |
| 22.1 | 180 | |
| 21.8 | 181 | |
| 21.5 | 182 | |
| 21.2 | 183 | |
| 20.9 | 184 | |
| 20.6 | 185 | |
| 20.3 | 186 | |
| 20.0 | 187 | |
| 19.7 | 188 | |
| 19.4 | 189 | |
| 2.9 | 245 | |
| 2.6 | 246 | |
| 2.4 | 247 | |
| 2.1 | 248 | |
| 1.8 | 249 | |
| 1.5 | 250 | |
| 1.2 | 251 | |
| 0.9 | 252 | |
| 0.6 | 253 | |
| 0.3 | 254 | |
| 0.0 | 255 | |

The surface texture image generation step S5 generates a surface texture image in which the colorimetric values (metallic colors) calculated for each predetermined angle in the observation angle range (0 to 75 degrees) are disposed in the order of magnitude of observation angles and in an amount according to a ratio of the number of pixels for each shading level associated with the observation angle.

In the present embodiment, the surface texture image is a two-dimensional image having a lateral width of 128 pixels, a height of 200 pixels, and the total number of pixels of 25,600. The 25,600 pixels were multiplied by the ratio shown in Table 1 to calculate the number of pixels for each shading level (hereinafter referred to as "the number of CSX pixels"). The calculated number of CSX pixels are shown in Table 3. In Table 3, the number of measured pixels, the number of corrected pixels, the ratio obtained on the basis of the number of corrected pixels, and the observation angles corresponding to each shading level [0 to 255] shown in Table 1 and Table 2 are described together.

**[Table 3]**

| Observation Angle | Shading Level | Measured Pixel Number | Corrected Pixel Number | Ratio | CSX Pixel Number |
|---|---|---|---|---|---|
| 75.0 | 0 | 0 | 0 | 0 | 0 |
| 74.7 | 1 | 0 | 0 | 0 | 0 |
| 74.4 | 2 | 0 | 0 | 0 | 0 |
| 74.1 | 3 | 0 | 0 | 0 | 0 |
| 73.8 | 4 | 0 | 0 | 0 | 0 |
| 73.5 | 5 | 0 | 0 | 0 | 0 |
| 73.2 | 6 | 0 | 0 | 0 | 0 |
| 72.9 | 7 | 0 | 0 | 0 | 0 |
| 72.6 | 8 | 0 | 0 | 0 | 0 |
| 72.4 | 9 | 1 | 1 | 1.1E-05 | 0 |
| 72.1 | 10 | 3 | 3 | 3.4E-05 | 1 |
| 71.8 | 11 | 0 | 0 | 0 | 0 |
| 71.5 | 12 | 5 | 5 | 5.6E-05 | 1 |
| 71.2 | 13 | 12 | 12 | 0.00014 | 3 |
| 70.9 | 14 | 8 | 8 | 9E-05 | 2 |
| 70.6 | 15 | 43 | 43 | 0.00049 | 12 |
| 22.1 | 180 | 329 | 329 | 0.00371 | 95 |
| 21.8 | 181 | 336 | 336 | 0.00379 | 97 |
| 21.5 | 182 | 362 | 362 | 0.00408 | 105 |
| 21.2 | 183 | 308 | 308 | 0.00347 | 89 |
| 20.9 | 184 | 359 | 359 | 0.00405 | 104 |
| 20.6 | 185 | 491 | 491 | 0.00554 | 142 |
| 20.3 | 180 | 386 | 386 | 0.00435 | 111 |
| 20.0 | 187 | 355 | 355 | 0.00401 | 103 |
| 19.7 | 188 | 378 | 378 | 0.00426 | 109 |
| 19.4 | 189 | 363 | 363 | 0.0041 | 105 |
| 2.9 | 245 | 71 | 71 | 0.0008 | 21 |
| 2.6 | 246 | 92 | 92 | 0.00104 | 27 |
| 2.4 | 247 | 185 | 185 | 0.00209 | 53 |
| 2.1 | 248 | 245 | 245 | 0.00276 | 71 |
| 1.8 | 249 | 180 | 180 | 0.00203 | 52 |
| 1.5 | 250 | 131 | 131 | 0.00148 | 38 |
| 1.2 | 251 | 154 | 154 | 0.00174 | 44 |
| 0.9 | 252 | 218 | 218 | 0.00246 | 63 |
| 0.6 | 253 | 574 | 574 | 0.00648 | 166 |
| 0.3 | 254 | 1769 | 0 | 0 | 0 |
| 0.0 | 255 | 94923 | 0 | 0 | 0 |
| Total | | | 81636 | 1 | 25600 |

The surface texture display image generation device disposes the colorimetric values calculated for each predetermined angle on the surface texture image in the order of magnitude of the observation angles. In the present embodiment, the colorimetric value with the observation angle of 0 degrees is disposed in an upper left pixel of the two-dimensional image. The colorimetric value with the observation angle of 75 degrees is disposed in a lower right pixel of the two-dimensional image. The corresponding observation angles increase from the upper left toward the lower right of the two-dimensional image. The surface texture display image generation device may dispose the colorimetric values so that the corresponding observation angles increase from the lower right toward the upper left of the two-dimensional image. That is, in the two-dimensional surface texture image generated by the surface texture display image generation device, the colorimetric values need only be disposed in the order of raster scan (scanning order) in the two-dimensional image and in the order of magnitude of the angles in the above-described observation angle range.

When the colorimetric values calculated for each predetermined angle are disposed on the surface texture image in the order of magnitude of the observation angles, the colorimetric values are disposed in an amount (number of pixels) corresponding to a ratio of the number of pixels for each shading level associated with the observation angle. The colorimetric values for each predetermined angle in the observation angle range (0 degrees to 75 degrees) are not evenly disposed on the surface texture image in the order of magnitude of the observation angles in the observation angle range.

On the surface texture image, the colorimetric values (metallic colors) for each predetermined angle in the observation angle range (0 degrees to 75 degrees) are not evenly disposed in the order of magnitude of the observation angles in the observation angle range. On the surface texture image, the pixel ratio of the shading level associated with the observation angle is not taken into consideration.

That is, the colorimetric value (metallic color) of a certain observation angle A is disposed in a large number on the surface texture image when pixels of the corresponding shading levels are included in a large number on the painted surface image. On the other hand, the colorimetric value (metallic color) of a certain observation angle A is not disposed in a large number on the surface texture image when pixels of the corresponding shading level are not included in a large number on the painted surface image.

Therefore, even without using shape data of a three-dimensional CAD, an overall impression when a metallic paint color is applied on the painted surface can be predicted from the surface texture image generated from the change in shade of the painted surface of the painted surface image.

On the basis of input parameters, the surface texture display unit 55 selects a most suitable surface texture image in advance from the surface texture images generated by the surface texture display image generation device and generates the surface texture display screen 10. Further, the surface texture image may be generated by the paint color retrieval device 100 instead of the surface texture display image generation device.

### [Operation of paint color retrieval device 100]

Fig. 14 is a function selection menu screen 110 displayed on the image output unit 3 of the paint color retrieval device 100. The person in charge of the paint company uses the paint color retrieval device 100, for example, at the time of a meeting with the designer. On the function selection menu screen 110, menu buttons (approximate color retrieval 101, changed color selection 102, sample color retrieval 103, texture map generation 104) corresponding to four functions, which are functions of the paint color retrieval device 100, are displayed. The person in charge selects a menu corresponding to a function desired to be used by using an input means such as a mouse connected to the computer 2.

When the menu button "approximate color retrieval 101" is selected, the paint color retrieval device 100 functions as the approximate color retrieval unit 51. On the image output unit 3, a menu screen to which parameters necessary for starting the approximate color retrieval unit 51 are input or the like is displayed, and then the approximate color display screen 6 shown in Fig. 6 is displayed.

When the menu button "changed color selection 102" is selected, the paint color retrieval device 100 functions as the changed color selector 52. On the image output unit 3, a menu screen to which parameters necessary for starting the changed color selector 52 are input or the like is displayed, and then the changed color presentation screen 7 shown in Fig. 7 is displayed.

When the menu button "sample color retrieval 103" is selected, the paint color retrieval device 100 functions as the sample color retrieval unit 53. On the image output unit 3, a menu screen to which parameters necessary for starting the sample color retrieval unit 53 are input or the like is displayed, and then the sample color display screen 8 shown in Fig. 8 is displayed.

When the menu button "texture map generation 104" is selected, the paint color retrieval device 100 functions as the texture map generator 54. On the image output unit 3, a menu screen to which parameters necessary for starting the texture map generator 54 are input or the like is displayed, and then the texture map display screen 9 shown in Fig. 9 is displayed.

When a menu button "surface texture display 105" is selected, the paint color retrieval device 100 functions as the surface texture display unit 55. On the image output unit 3, a menu screen to which parameters necessary for starting the surface texture display unit 55 are input or the like is displayed, and then the surface texture display screen 10 shown in Fig. 10 is displayed.

The person in charge listens to the designer regarding a paint color required by the designer and selects a paint color having a color and texture that match an image required by the designer from the paint color database D. At that time, when the designer wants to transfer a paint color required by the designer to the person in charge using a computer graphic image such as a photograph, the person in charge selects the "sample color retrieval 103" on the function selection menu screen 110. The designer selects a paint color having a color and texture that match the image required by the designer from approximate colors output by the sample color retrieval unit 53, and the paint color is set as a "reference color."

Also, the person in charge may select the "texture map generation 104" on the function selection menu screen 110 and have the texture map generator 54 generate a texture map. The person in charge generates a texture map classified on the basis of a feature amount that is close to an expression related to the paint color expressed by the designer and presents it to the designer. The designer selects a paint color having a color and texture that match the image required by the designer from paint colors mapped to the texture map output by the texture map generator 54, and the paint color is set as a "reference color."

Also, the person in charge may select the "surface texture display 105" on the function selection menu screen 110 and have the surface texture image displayed on the surface texture display unit 55. The person in charge presents the surface texture image generated from change in shade of the painted surface of the painted surface image to the designer. The designer can predict an overall impression when the selected metallic paint color is applied on the painted surface.

After the reference color is selected, the person in charge performs work of bringing the reference color closer to the paint color required by the designer. For example, the person in charge selects "approximate color retrieval 101" on the function selection menu screen 110 and has the approximate color retrieval unit 51 select a plurality of approximate colors that are close to the reference color from the paint color database D and present them. The designer can select a paint color that is closer to the paint color required by the designer from the plurality of presented approximate colors.

When the designer instructs to change the reference color based on indexes such as an impression of shade, saturation, and tints (for example, a reddish tint and a bluish tint) of the metallic paint color, the person in charge selects the "changed color selection 102" on the function selection menu screen 110 and has the changed color selector 52 select a plurality of changed colors changed on the basis of the indexes such as saturation and tints from the paint color database D and present them. The designer can observe the plurality of changed colors changed on the basis of such indexes and can confirm a correction method for adjusting the reference color to the paint color required by the designer.

According to the paint color retrieval device 100 according to the present embodiment, the five functions of the paint color retrieval device 100 can be used properly to efficiently retrieve a paint color having a color and texture that match the image required by the designer from the paint color database D. In each function, the person in charge of performing selection of the paint color required by the designer can be efficiently assisted by the rating and the additional information included in the paint color additional information D3 even when the person in charge of the paint company lacks knowledge and experience regarding paint colors.

### [Industrial applicability]

The present invention can be applied to selection of paint colors of industrial products.

### [DESCRIPTION OF REFERENCE NUMERAL]

- 100: Paint color retrieval device
- 1: Image input unit
- 2: Computer
- 3: Image output unit
- 51: Approximate color retrieval unit
- 52: Changed color selector
- 53: Sample color retrieval unit
- 54: Texture map generator
- 55: Surface texture display unit
- 6: Approximate color display screen
- 7: Changed color presentation screen
- 8: Sample color display screen
- 9: Texture map display screen
- 110: Function selection menu screen
- 200: Multi-angle spectrophotometer

## Claims

1. A paint color retrieval device comprising:
a computer including a paint color database, wherein
the paint color database includes:
paint color basic information having paint color blend information of a paint color; and
paint color analysis information analyzed on the basis of a spectral reflectance obtained by measuring the paint color using a multi-angle spectrophotometer.

2. The paint color retrieval device according to claim 1, wherein the paint color analysis information includes:
a colorimetric value for each predetermined observation angle calculated from the spectral reflectance; and
a computer graphic image generated from the colorimetric value.

3. The paint color retrieval device according to claim 1, wherein the paint color database further includes paint color additional information having rating information for the paint color.

4. The paint color retrieval device according to claim 1, wherein the paint color database further includes paint color additional information having information on a blend of the paint color.

5. The paint color retrieval device according to claim 1, performing:
approximate color retrieval in which an approximate color of a reference color is retrieved from the paint color database;
changed color selection in which a changed color which has been changed from the reference color on the basis of a predetermined index is selected from the paint color database;
a sample color retrieval in which a paint color which is approximate to a sample color is retrieved from the paint color database;
a texture map generation in which a classification map is generated from a feature amount of the paint color database; and
a surface texture display in which a surface texture image which allows an overall impression when a paint color is applied on a painted surface to be predicted is displayed on the basis of the paint color database.
